Europäisches Patentamt

(19) **European Patent Office**

**Office européen des brevets**

(11) Numéro de publication: **0 097 350**
**B1**

(12) **FASCICULE DE BREVET EUROPEEN**

(45) Date de publication du fascicule du brevet: **20.11.86**

(51) Int. Cl.⁴: **G 04 C 3/14**

(21) Numéro de dépôt: **83105999.3**

(22) Date de dépôt: **20.06.83**

(54) **Procédé d'alimentation d'un moteur pas à pas monophasé pour pièce d'horlogerie.**

(30) Priorité: **21.06.82 FR 8211433**

(43) Date de publication de la demande:
**04.01.84 Bulletin 84/01**

(45) Mention de la délivrance du brevet:
**20.11.86 Bulletin 86/47**

(84) Etats contractants désignés:
**CH DE GB LI**

(56) Documents cités:
**EP-A-0 021 320**
**FR-A-2 200 675**
**FR-A-2 413 663**
**GB-A-2 082 806**

**10e CONGRES INTERNATIONAL DE
CHRONOMETRIE, no. 3, 10 au 14 septembre
1979, page 73-80, Büren, CH. A. PITTET et al.:
"Amélioration de la fiabilité et de la
consommation d'énergie de moteurs pas à pas
par une technique d'auto-contrôle"**

(73) Titulaire: **Omega SA
Rue Stämpfli 96
CH-2500 Bienne (CH)**

(72) Inventeur: **Tu Xuan, Mai
Rue Blancherie 18
CH-1022 Chavannes (CH)**

(74) Mandataire: **de Raemy, Jacques et al
SSIH Management Services S.A. Service des
Brevets Rue Stämpfli 96
CH-2500 Bienne (CH)**

Courier Press, Leamington Spa, England.

**Description**

La présente invention a pour objet un procédé et un dispositif d'alimentation d'un moteur pas à pas pour pièce d'horlogerie adapté pour fournir à la bobine du moteur une énergie suffisante pour que le rotor franchisse son pas lors de chaque impulsion de commande, ledit moteur ayant un couple de positionnement Ca, un couple résistant Cr et un facteur de couplage aimant—bobine k.

Plusieurs solutions ont déjà été apportées pour alimenter la bobine du moteur par une énergie juste suffisante pour assurer que le rotor franchisse son pas à coup sûr. C'est le cas par exemple décrit dans le brevet CH 585 428 où, lorsqu'on a détecté pendant la période d'alimentation du moteur un minimum de courant traversant la bobine, on conclut que le rotor va faire son pas puisqu'à ce minimum de courant correspond un maximum de vitesse du rotor. On peut cependant montrer que ce qui vient d'être dit n'est pas toujours vrai et cela peut se vérifier dans la description et les dessins qui accompagnent la demande de brevet FR 2 459 579. Cette dernière citation propose de remédier aux inconvénients cités plus haut en mettant en oeuvre un dispositif basé sur l'intégration de la différence de flux mutuel aimant—bobine pour détecter si le rotor a franchi son pas ou non. Si ce dispositif est très, sûr du fait de l'écart d'amplitudes recueillies entre un pas réussi et un pas raté, il présente l'inconvénient de devoir utiliser un intégrateur muni d'un condensateur qui est difficilement miniaturisable au-delà de certaines limites. De plus, de dispositif ne fait que de détecter si le pas a été franchi ou non, mais ne propose pas une solution pour adapter la longueur des impulsions motrices à la charge réelle qui se présente sur le moteur.

C'est le but de la présente invention de remédier aux inconvénients cités ci-dessus et de proposer un procédé pour asservir la marche d'un moteur pas à pas à la charge imposée à son rotor et ceci grâce aux moyens qui apparaissent dans les revendications.

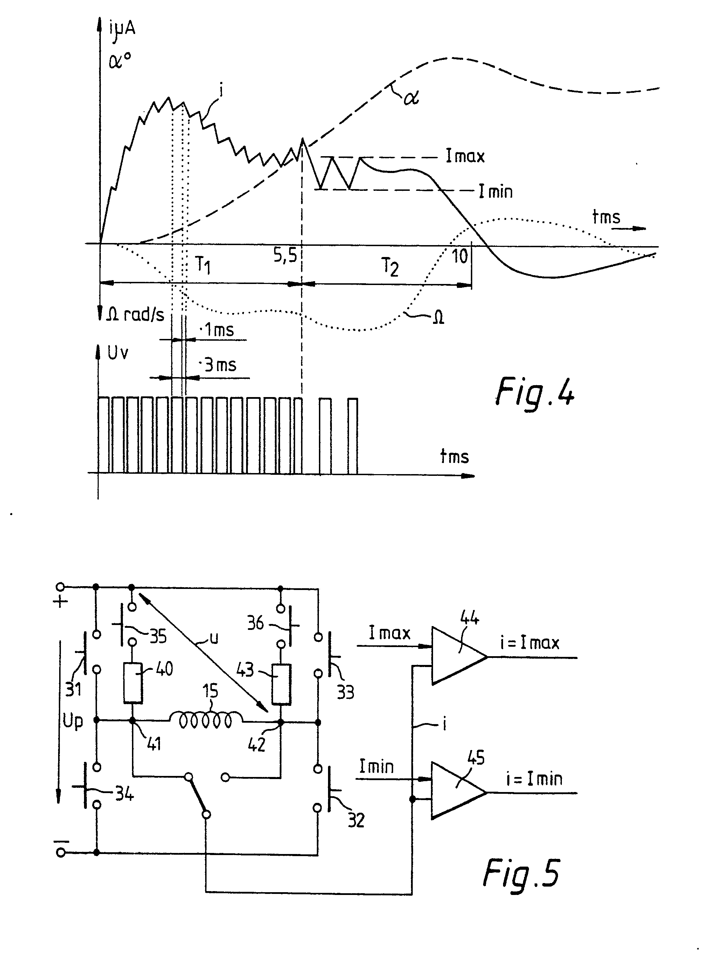

Par tension continue au sens des revendications, il faut également comprendre une tension continue hachée telle que représentée à la figure 4.

L'invention sera comprise maintenant à la lumière de la description qui suit et pour l'intelligence de laquelle on se référera, à titre d'exemple, au dessin dans lequel:

La figure 1a montre une exécution de principe d'un moteur monophasé dipolaire connu.

La figure 1b représente le signal d'attaque de ce moteur.

La figure 1c est un graphique représentant le couple de positionnement Ca, le couple résistant Cr et le facteur de couplage aimant—bobine k du moteur pas à pas en fonction de la position angulaire de son rotor.

Les figures 2, 3 et 4 sont des graphiques établis pour diverses conditions de fonctionnement d'un moteur pas à pas alimenté selon le procédé de la présente invention et qui montrent le courant i dans la bobine, la position angulaire α du rotor et sa vitesse angulaire Ω en fonction du temps t.

La figure 5 est un schéma montrant un dispositif qui permet de mettre en oeuvre la présente invention.

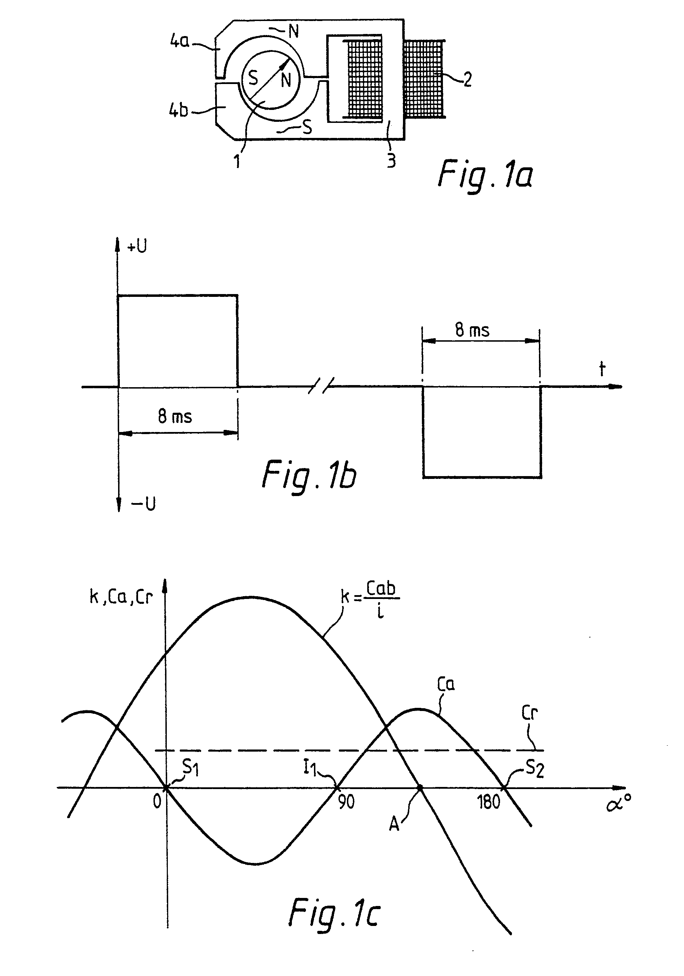

La figure 1a représente, très schématisée, une exécution de principe d'un moteur pas à pas monophasé bipolaire. Un aimant permanent cylindrique 1 à aimantation diamétrale SN constitue le rotor de ce moteur. Son stator est composé d'un bobine 2 qui, lorsqu'elle est excitée, produit un flux magnétique qui est reporté à l'entrefer au moyen de la culasse 3 et des pièces polaires 4a et 4b réalisées en matériau ferromagnétique doux. A l'arrêt, le rotor occupe la position de réluctance minimum telle qu'elle est montrée sur la figure 1a. Si une impulsion positive est envoyée à la bobine, le rotor tournera d'un pas, c'est-à-dire de 180°; une seconde impulsion, mais négative, permettra au rotor de poursuivre sa course dans le même sens et de franchir ainsi un nouveau pas et ainsi de suite.

La figure 1b représente, en fonction du temps, les impulsions de polarité alternées qui font avancer le moteur comme cela est connu de l'état de la technique. La durée de chaque impulsion est choisie suffisamment longue pour que le rotor franchisse son pas dans tous les cas de charge qui peuvent se présenter. Cette durée est généralement de l'order de 8 ms.

La figure 1c rapelle les couples mis en présence dans un moteur pas à pas monophasé bipolaire classique qui sont représentés in fonction de la position angulaire α du rotor. Dû à l'action de l'aimant seul, on trouve d'abord un couple de positionnement Ca. Dû ensuite à l'interaction du flux de l'aimant avec le flux de la bobine lorsque celle-ci est alimentée, on trouve un couple dynamique moteur Cab représenté sur la figure 1c par le facteur de couplage aimant—bobine $k = Cab/i$, où i est le courant circulant dans la bobine. Enfin agit sur le rotor un couple mécanique résistant Cr qui se compose du couple utile nécessaire pour mouvoir les organes de la montre et, entre autres, du couple de frottement sec provoqué par les paliers dans lequels tourne l'axe du rotor. La figure montre que la construction du moteur est telle que les couples Ca et Cab sont déphasés de 45° environ l'un par rapport à l'autre. Initialements le rotor est en position $S_1$. Si une impulsion positive est envoyée à la bobine et qu'à la suite de cela le rotor franchit son pas, ledit rotor se retrouvera en position $S_2$ et aura tourné de 180°. L'impulsion de courant qui crée le couple mutuel $Cab = k \cdot i$ permet ainsi au rotor de se mouvoir du premier point d'équilibre $S_1$ au second point d'équilibre $S_2$ et ceci selon l'équation du mouvement:

$$J \frac{d\Omega}{dt} = Cab + Ca - Cr \qquad (1)$$

où est la vitesse angulaire du rotor et J son moment d'inertie.

A l'ordinaire, on alimente la bobine par une impulsion à tension constante en provenance directe d'une source, telle une pile. On s'arrange pour que la durée de cette impulsion soit assez longue pour que le rotor progresse normalement d'un pas. La plupart du temps, le moteur n'est pas chargé et fonctionne presque à vide. Dans ce cas, le couple résistant se confond avec l'axe α et dès que le rotor a dépassé le point d'équilibre instable $I_1$ la tension d'alimentation pourrait être interrompue, car le reste du parcours, de $I_1$ à $S_2$, est effectué grâce aux énergies cinétique et potentielle emmagasinées entre $S_1$ et $I_1$. Il existe cependant des cas où le couple résistant n'est pas négligeable. Ce cas est représenté à la figure 1c par la valeur Cr qui, dans le cas donné en exemple, peut être considérée comme un maximum. Il est alors nécessaire de prolonger la durée de l'impulsion au moins jusqu'à l'instant où le couple de positionnement Ca devient supérieur au couple résistant Cr. Une telle alimentation à impulsions de durée constante suffisamment longues pour couvrir tous les cas qui se présentent est naturellement dispendieuse en énergie.

A observer la figure 1c, on s'aperçoit que, lorsque le facteur de couplage k change de signe au point A, le couple de positionnement Ca est supérieur au couple résistant Cr, ce qui signifie qu'à partir de cette position angulaire occupée par le rotor, on est assuré que le rotor franchira son pas, même en l'absence du courant d'alimentation. La présente invention tire profit de cette observation et se propose de détecter le passage du rotor au point A pour interrompre l'alimentation de la bobine à ce moment-là.

La solution au problème posé par cette détection peut être trouvée en observant la dérivée du courant dans la bobine du moteur quant on court-circuite cette bobine.

En effet, l'équation de tension d'un moteur pas à pas monophasé s'écrit:

$$U = ri + L\frac{di}{dt} + k\Omega \qquad (2)$$

où:
U = tension d'alimentation aux bornes de la bobine;
r = résistance de la bobine;
L = inductance de la bobine;
kΩ Ui = tension induite produite par la rotation du rotor.

Si l'on court-circuite la bobine, alors U=0 et l'équation (2) devient:

$$\frac{di}{dt} = -\frac{1}{L}(ri + k\Omega) \qquad (3)$$

De l'expression ci-dessus et avant que le facteur de couplage k ne passe par le point A, on voit que le courant i, la vitesse angulaire Ω et le facteur k sont positifs. Il ressort de ceci que la dérivée di/dt est fortement négative et que si l'on se fixe un seuil inférieur Imin comme limite au-dessous de laquelle le courant produit par la force contre-électromotrice du moteur (Ui) ne doit pas tomber, ledit seuil sera atteint dans un laps de temps très court compté à partir du moment où la bobine est mise en court-circuit.

De la même expression (3) on voit qu'après le passage par le point A du facteur de couplage k, i et Ω restent positifs alors que k devient négatif. Il en résulte que la dérivée di/dt est d'abord moins négative que dans le cas considéré à l'alinéa ci-dessus, peut passer par zéro si $|k\Omega| = ri$ et même devenir positive dans le cas où $|k\Omega| > ri$. Ainsi, il faudra un laps de temps beaucoup plus long au courant développé par le moteur pour atteindre la limite Imin dont il a été question plus haut.

De ce qui précède, on comprend que la détection du passage du rotor au point A, passage qui permet d'affirmer que ledit rotor franchira son pas à coup sûr, peut être basée sur l'évolution de la dérivée di/dt ou si l'on préfère du temps nécessaire au courant de court-circuit pour passer de la valeur de courant mesuré au début du court-circuit à une autre valeur qu'on se fixe comme limite inférieure. Ce temps nécessaire qu'on appellera ΔT peut être comparé à une période de référence, soit $\Delta T_{réf.}$. Si ΔT est égal ou plus long que $\Delta T_{réf.}$, on conclut que le passage au point A a été effectué et l'on interrompt l'alimentation de la bobine du moteur.

Cette méthode consiste donc selon l'invention à alimenter la bobine entre deux limites de courant, tout au moins pendant une période $T_2$ où l'on peut s'ettendre à détecter le point intéressant A: und limite supérieure Imax qui, dès qu'elle est atteinte, conduit à court-circuiter la bobine et une limite inférieure Imin qui, dès qu'elle est atteinte, conduit à réalimenter la bobine. Pendant cette période, la bobine est donc alimentée à courant sensiblement constant. Toujours selon l'invention, la période $T_2$ est précédée par une période $T_1$ pendant laquelle la bobine est alimentée à tension constante.

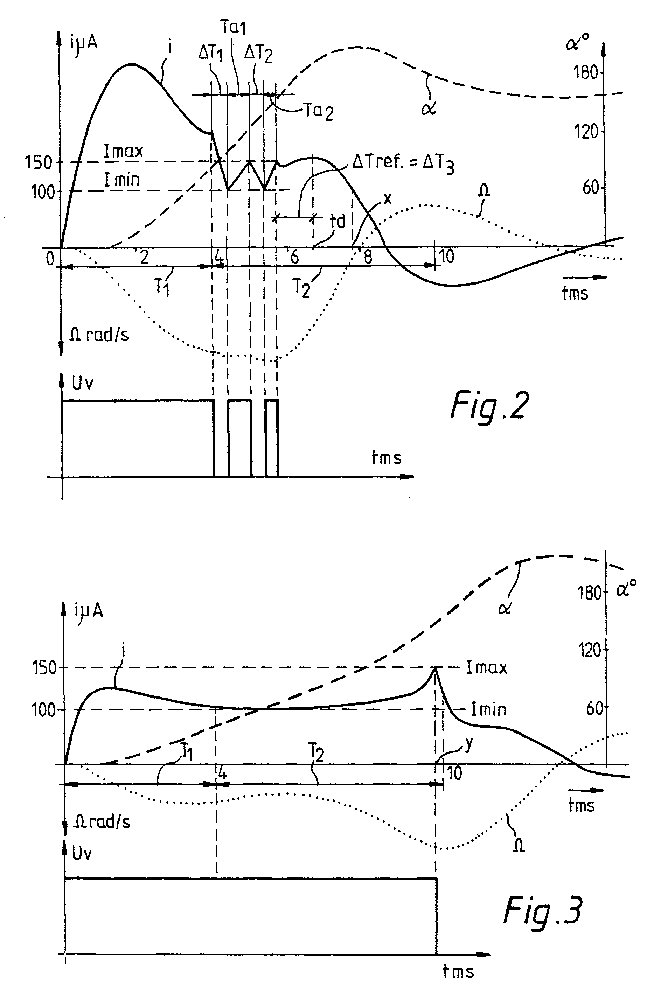

La figure 2 est un graphique qui illustre la méthode qui vient d'être décrite. On y trouve, exprimés en fonction du temps t, le courant i dans la bobine en même temps que la position α et la vitesse angulaire Ω du rotor.

Pendant une première période fixée d'avance ou prédéterminée $T_1$, on alimente la bobine à tension U constante. Le courant qui en résulte dépend de la tension U, de la tension induite Ui produite par la rotation du rotor et de la résistance r de la bobine selon l'expression

$$i = \frac{U - Ui}{r}$$

Au début de la période $T_1$, le courant i monte rapidement. Puis, dès que le rotor se met à tourner, une tension induite prend naissance dans la bobine, ce qui a pour effet d'infléchir le courant puis de le faire décroître. Cette première phase $T_1$, qui dure 4 ms pour le moteur pris en exemple, a pour but de lancer le rotor. Sa durée dépendra du moteur pris en considération et des divers couples qui lui sont propres, comme cela est apparent de l'équation du mouvement (1) citée plus haut. Dans le graphique de la figure 2, on s'aperçoit qu'à la fin de la période $T_1$, le rotor a tourné d'environ 80° et qu'à ce moment-là sa vitesse angulaire $\Omega$ est proche de la vitesse maximum.

Dès le début de la période $T_2$, l'alimentation du moteur entre dans une phase d'alimentation à courant constant réglée par un dispositif qui limite ce courant entre deux valeurs Imin et Imax choisies ici à 100 µA et 150 µA respectivement. Comme au début de la période $T_2$, le courant i est supérieur à Imax, on court-circuite la bobine jusqu'à ce que i ait atteint la valeur Imin de 100 µA. Comme le temps $\Delta T_1$ mis par le courant à passer d'une valeur à l'autre est inférieur à la durée de référence $\Delta T_{réf.}$ fixée ici à 1 ms, on conclut que le passage au point A (Fig. 1c) n'a pas été effectué et on réalimente la bobine (phase $Ta_1$) jusqu'à ce que le courant atteigne la valeur Imax de 150 µA. Vient ensuite une deuxième période de court-circuit $\Delta T_2$ suivie par une deuxième période de réalimentation (phase $Ta_2$) à partir de laquelle on court-circuite à noiveau la bobine pendant la période $\Delta T_3$. Pendant la durée $\Delta T_3$, la dérivée di/dt, négative pendant un laps de temps très court, s'annule puis devient positive. Au moment où $\Delta T_3 = \Delta T_{réf.}$, on interrompt l'alimentation de la bobine (temps td) puisqu'on peut conclure qu'à ce moment-là le point A (fig. 1c) a été franchi. Si cette interruption n'avait pas lieu et comme la période $T_2$ s'étend de 4 à 10 ms, on comprendra que la bobine serait réalimentée au temps x, c'est-à-dire au moment où le courant atteindrait les 100 µA, ce qui serait inutile et dispendieux en énergie consommée. Le période $T_2$ a une durée de 6 ms dans l'exemple illustré en figure 2. C'est-à-dire que pour le moteur choisi et pour la charge maximum agissant sur son rotor, on sait qu'il aura au moins franchi son pas à la fin de cette durée. Il est donc inutile de maintenir enclenché le dispositif d'alimentation à courant constant au-delà de ladite durée.

De ce qui vient d'être dit, on comprend que le moteur n'a été alimenté que par une énergie juste suffisante pour garantir le franchissement du pas, contrairement à ce qui se fait d'habitude où la tension d'alimentation est maintenue suffisamment longtemps pour couvrir tous les cas de charge imposés au rotor. On remarque que la consommation est nulle pendant les périodes de court-circuit, ce qui amène à une consommation moyenne très faible. D'autre part, la limitation par la valeur de consigne Imax empêche le courant de monter à des valeurs qui seraient prohibitives.

La figure 3 est un autre graphique illustrant la méthode selon la présente invention. Il s'agit d'un moteur dont la résistance r a été augmentée dans de fortes proportions (de 3'000 $\Omega$, comme dans le cas du moteur de la figure 2, à 5'000 $\Omega$) pour simuler l'augmentation de la résistance de la source d'alimentation, comme cela se présente par exemple dans le cas d'une pile au lithium. Comme dans le cas étudié plus haut, la bobine est alimentée à tension constante pendant une durée fixe $T_1$ qui est ici de 4 ms. Comme à la fin de cette période le courant i est inférieur à la valeur de consigne Imax, on continue à alimenter la bobine jusqu'à ce que le courant atteigne ladite valeur Imax, ce qui se produit à l'instant y. A ce moment, on court-circuite la bobine comme on l'a déjà vu à propos du cas précédent. Le graphique fait apparaître une dérivée di/dt fortement négative qui pourrait alors conduire à une réalimentation de la bobine. Cette réalimentation n'a cependant pas lieu puisque, un court laps de temps après la mise en court-circuit de la bobine, la période $T_2$ s'achève et qu'on est sûr que le rotor a progressé d'un pas. Ainsi donc, dans le procédé objet de l'invention, le fait que $\Delta T$ soit égal à $\Delta T_{réf.}$ n'est pas une condition nécessaire mais seulement une condition suffisante pour interrompre l'alimentation de la bobine. En d'autres termes, la non-réalimentation de la bobine intervient soit à la fin de la période prédéterminée $T_2$, soit à la suite de la détection du passage au point A (fig. 1c) si cette détection peut se faire avant la fin de ladite période $T_2$.

La figure 4 est une variante d'alimentation du moteur selon l'invention. On retrouve le même procédé que celui déjà décrit. L'àlimentation est divisée en deux tranches $T_1$ et $T_2$. Pendant la période $T_2$, la bobine est alimentée à courant sensiblement constant entre les deux limites Imax et Imin et l'alimentation est interrompue avant la fin de la période $T_2$, à la suite de la détection du changement de signe du facteur de couplage k, comme cela a déjà été discuté à propos de la figure 2. La figure 4 montre cependant, durant la période $T_1$, que la bobine n'est plus alimentée par une tension d'amplitude constante (U) mais par une tension formée d'une suite d'impulsions de même polarité, régulièrement espacées et d'amplitude constante. Dans l'exemple choisi, chaque impulsion a une durée de 0,3 ms et ces impulsions sont séparées l'une de l'autre par un espace de 0,1 ms. Il en résulte pour le courant i une courbe en dents de scie qui dure pendant toute la première période $T_1$. Cette façon de procéder présente au moins deux avantages: celui, d'une part, de permettre une adaptation aisée à des tensions de source qui varient dans des limites très différentes (utilisation d'une pile au lithium par exemple, dont la tension peut varier de 3 volts à 1,5 volts), celui, d'autre part, de prevenir qu'à la fin de la période $T_1$ le rotor n'ait acquis une énergie cinétique trop grande, ce qui conduirait à une perte inutile d'énergie.

Tel qu'il est proposé, le procédé selon l'invention exige qu'on puisse mesurer le courant développé dans le bobine. Cela peut être réalisé de différentes façons, par exemple au moyen d'une bobine auxiliaire ou d'une sonde de Hall ou encore d'une résistance placée en série avec la bobine et aux bornes de laquelle on mesure la chute de tension représentative du courant dans la bobine. C'est ce dernier dispositif qui a été choisi ici et dont on va exliquer maintenant le mécanisme de fonctionnement.

La figure 5 montre un schéma de principe qui permet de mettre en oeuvre l'alimentation du moteur selon l'invention. Dans ce schéma, on trouve la bobine 15 du moteur et deux résistances 40 et 43 qui peuvent être mises en circuit lorsqu'on ferme respectivement l'interrupteur 35 ou l'interrupteur 36. On trouve entre les bornes 41 et 42 des impulsions de commande alternées d'amplitude U en provenance de la source d'alimentation Up livrée par la pile lorsque les interrupteurs 31—32, respectivement 33—34 sont fermés. Dans les techniques mises en jeu ici, ce sont des transistors qui jouent le rôle des interrupteurs, lesquels reçoivent leurs signaux d'ouverture et de fermeture d'un circuit de mise en forme classique. Si l'on se reporte maintenant à la figure 2 et aux explications qui ont été données à son propos, la séquence de commande s'établit selon le tableau ciaprès pour une impulsion positive (o=ouvert; f=fermé):

| Période | | Interrupteurs | | | | | |
|---|---|---|---|---|---|---|---|
| | | 31 | 32 | 33 | 34 | 35 | 36 |
| $T_1$ | | f | f | o | o | o | o |
| $T_2$ | $\Delta T_1$ | o | o | f | o | f | o |
| | $Ta_1$ | o | f | o | o | f | o |
| | $\Delta T_2$ | o | o | f | o | f | o |
| | $Ta_2$ | o | f | o | o | f | o |
| | $\Delta T_3$ | o | o | f | o | f | o |
| | $>\Delta T_3$ | f | o | f | o | o | o |

On peut établir un tableau semblable pour une impulsion négative: c'est alors la résistance 43 et l'interrupteur 36 qui entrent en jeu. Entre le+de l'alimentation et l'une des points 41 ou 42 (selon que l'on a affaire à une impulsion positive ou négative), on dispose un double comparateur. Le premier comparateur 44 compare le courant i développé dans la bobine avec un courant de consigne Imax pour donner un signal de sortie dès que i=Imax, ce qui met en oeuvre les séquences $\Delta T_1$, $\Delta T_2$ et $\Delta T_3$ indiquées dans le tableau ci-dessus. Le second comparateur 45 agit de façon analogue et fournit un signal de sortie dès que i=Imin, ce qui met en oeuvre les séquences $Ta_1$ et $Ta_2$ du même tableau. De plus, le circuit est arrangé pour comparer les durées $\Delta T_1$, $\Delta T_2$, etc., à une durée $\Delta T_{réf.}$ pour interrompre l'alimentation de la bobine et la mettre en court-circuit dans un comparateur non représenté au dessin. On remarquera que les comparateurs pourraient être fondus en un seul comparateur présentant par lui-même une hystérèse adaptée aux courants de consigne Imin et Imax.

Le schéma de la figure 5 et le tableau ci-dessus montrent que pendant la période $T_2$, l'alternance de court-circuits et de réalimentations est réalisée à travers la résistance 40 disposée en série avec la bobine 15. Comme on désire que le signal recueilli aux bornes de la résistance soit le plus élevé possible pour obtenir une tension confortable à l'entrée des comparateurs, on choisira pour la résistance une valeur ohmique assez élevée, par exemple du même ordre de grandeur que celle de la bobine. Dans ce cas-là et pendant les périodes de réalimentation Ta, il se pourrait que l'énergie pour faire continuer la rotation du rotor soit insuffisante. Pour remédier à cet inconvénient, il est alors possible, pendant lesdites périodes de réalimentation de fermer par intermittence l'interrupteur 31 pour court-circuiter la résistance 40 et amener la pleine alimentation aux bornes de la bobine, étant entendu que la mesure du courant a toujours lieu pendant les périodes où cet interrupteur est ouvert.

La figure 5 montre encore qu'il est possible, pendant la première période $T_1$ d'alimenter la bobine avec une suite d'impulsions régulièrement espacées comme cela a été discuté à propos du graphique de la figure 4. Il suffit dans ce cas d'ouvrir et de fermer l'interrupteur 31 selon la cadence qu'on aura choisie.

Il ressort des explications qui viennent d'être données que la présente invention approte une solution nouvelle à l'asservissement d'un moteur de montre aux divers couples qui agissent sur lui, solution qui permet d'adapter la longueur des impulsions motrices à la charge réelle présente sur le rotor et de fournir à la bobine une énergie juste suffisante pour permettre au rotor de franchir son pas. L'économie de consommation qui en résulte est évidente.

**Revendications**

1. Procédé d'alimentation d'un moteur pas à pas monophasé pour pièce d'horlogerie adapté pour fournir à la bobine du moteur une énergie suffisante pour que le rotor franchisse son pas lors de chaque impulsion de commande, ledit moteur ayant un couple de positionnement Ca, un couple résistant Cr et un facteur de couplage aimant—bobine k, caractérisé par la succession des étapes suivantes:

— pendant une première période prédéterminée $T_1$, ou alimente la bobine par une tension continue,
— après ladite période $T_1$, on alimente la bobine à courant sensiblement constant pendant une seconde période d'une durée maximum prédéterminée $T_2$, le rotor atteignant à la fin de ladite période $T_2$ au moins une position angulaire telle qu'on est assuré qu'il franchira son pas, et

— on interrompt l'alimentation de la bobine dès la fin de ladite période $T_2$.

2. Procédé d'alimentation d'un moteur pas à pas monophasé pour pièce d'hologerie adapté pour fournir à la bobine du moteur une énergie suffisante pour que le rotor franchisse son pas lors de chaque impulsion de commande, ledit moteur ayant un couple de positionnement Ca, un couple résistant Cr et un facteur de couplage aimant—bobine k, caractérisé par la succession des étapes suivantes:

— pendant une première période prédéterminée $T_1$, on alimente la bobine par une tension continue,

— après ladite période $T_1$, on alimente la bobine à courant sensiblement constant pendant une seconde période d'une durée maximum prédéterminée $T_2$, le rotor atteignant à la fin de ladite période $T_2$ au moins une position angulaire telle qu'on est assuré qu'il franchira son pas,

— pendant ladite période $T_2$, on détecte si le facteur de couplage k a changé de signe, auquel cas on conclut que le rotor occupe déjà à l'instant td de cette détection une position angulaire telle qu'on est assuré qu'il franchira son pas, et

— on interrompt l'alimentation de la bobine audit instant td.

3. Procédé selon la revendication 1 ou la revendication 2, caractérisé par le fait que la tension continue alimentant la bobine pendant la première période prédéterminée $T_1$ est une tension d'amplitude constante.

4. Procédé selon la revendication 1 ou la revendication 2, caractérisé par le fait que la tension continue alimentant la bobine pendant la première période prédéterminée $T_1$ est une tension formée d'une suite d'impulsions de même polarité, régulièrement espacées et d'amplitude constante.

5. Procédé selon la revendication 2, caractérisé par le fait que si au début de la période $T_2$ le courant développé dans la bobine est supérieur à une première valeur de consigne Imax, on agit de la façon suivante:

— on court-circuite la bobine jusqu'à ce que ledit courant atteigne une seconde valeur de consigne Imin<Imax,

— à partir de ce moment-là, on réalimente la bobine jusqu'à ce que le courant atteigne à nouveau la première valeur de consigne Imax, après quoi on court-circuite la bobine jusqu'à ce que le courant atteigne à nouveau la seconde valeur de consigne Imin, et ainsi de suite,

— on mesure le laps de temps $\Delta T$ nécessaire au courant pour passer de chacune des valeurs Imax à la valeur Imin que suit immédiatement,

— on compare ledit laps de temps $\Delta T$ à une période de référence $\Delta T_{rér.}$, et

— on ne réalimente plus la bobine dès que $\Delta T \geqslant \Delta T_{réf.}$.

6. Procédé selon la revendication 2, caractérisé par le fait que si au début de la période $T_2$ le courant développé dans la bobine est inférieur à une première valeur de consigne Imax, on agit de la façon suivante:

— on maintient l'alimentation jusqu'à ce que ledit courant atteigne ladite première valeur de consigne Imax,

— on court-circuite la bobine jusqu'à ce que le courant atteigne une seconde valeur de consigne Imin<Imax,

— à partir de ce moment-là, on réalimente la bobine jusqu'à ce que le courant atteigne à nouveau la première valeur de consigne Imax, après quoi on court-circuite la bobine julsu'à ce que le courant atteigne à nouveau la seconde valeur de consigne Imin, et ainsi de suite,

— on mesure le laps de temps $\Delta T$ nécessaire au courant pour passer de chacune des valeurs Imax à la valeur Imin qui suit immédiatement,

— on compare ledit laps de temps à une période de référence $\Delta T_{réf.}$, et

— on ne réalimente plus la bobine dès que $\Delta T \geqslant \Delta T_{réf.}$.

7. Procédé selon la revendication 5 ou la revendication 6, caractérisé par le fait que, dès que $\Delta T \geqslant \Delta T_{réf.}$, on maintient la bobine en court-circuit jusqu'à l'arrivée de l'impulsion de commande suivante.

8. Dispositif d'alimentation d'un moteur pas à pas pour la mise en oeuvre du procédé selon la revendication 1 ou la revendication 2, caractérisé par le fait qu'il comporte des moyens pour mesurer le courant dans la bobine pendant la seconde période $T_2$ et un système comparateur lié auxdits moyens pour maintenir sensiblement constant le courant traversant la bobine pendant ladite période $T_2$.

9. Procédé selon la revendication 1 ou la revendication 2, caractérisé en ce que ladite pièce d'horlogerie est une montre-bracelet.

**Patentansprüche**

1. Verfahren zur Speisung eines einphasigen Schrittmotors für eine Uhr, das in der Lage ist, der Motorspule eine ausreichende Energie zuzuführen, damit der Rotor während eines jeden Steuerimpulses einen Schritt ausführt, wobei der Motor ein Stellmoment (Ca), ein Widerstandsmoment (Cr) und einen Kopplungsfaktor Magnet/ Spule (k) aufweist, gekennzeichnet durch die folgenden Verfahrensschritte:

— während eines ersten vorgegebenen Zeitraums ($T_1$) wird die Spule mit einer Gleichspannung gespeist,

— nach diesem Zeitraum ($T_1$) wird die Spule mit konstantem Gleichstrom gespeist, während eines zweiten Zeitraums, dessen maximal vorgegebene Dauer ($T_2$) beträgt, wobei der Rotor am Ende des Zeitraumes ($T_2$) wenigstens eine

derartige Winkelstellung einnimmt, daß sichergestellt ist, daß er seinen Schritt ausführt und
— die Speisung der Spule wird nach dem Ende des zweiten Zeitraumes ($T_2$) unterbrochen.

2. Verfahren zur Speisung eines einphasigen Schrittmotors für eine Uhr, das in der Lage ist, der Motorspule eine ausreichende Energie zuzuführen damit der Rotor während eines jeden Steuerimpulses einen Schritt ausführt, wobei der Motor ein Stellmoment (Ca), ein Widerstandsmoment (Cr) und einen Kopplungsfaktor Magnet/Spule (k) aufweist, gekennzeichnet, durch die folgenden Verfahrensschritte:

— während eines ersten vorgegebenen Zeitraums ($T_1$ wird die Spule mit einer Gleichspannung gespeist,
— nach diesem Zeitruam ($T_1$) wird die Spule mit konstantem Gleichstrom gespeist während eines zweiten Zeitraumes einer maximalen vorgegebenen Zeitdauer ($T_2$), wobei der Rotor am Ende dieses Zeitraumes ($T_2$) wenigstens eine derartige Winkelstellung einnimmt, daß sichergestellt ist, daß er seinen Schritt ausführt,
— während des Zeitraums ($T_2$) wird gemessen, ob der Kopplungsfaktor (k) das Vorzeichen gewechselt hat, wobei in diesem Falle geschlossen wird, daß der Rotor bereits zum Zeitpunkt (td) dieser Messung eine derartige Winkelstellung einnimmt, daß sichergestellt ist, daß er seinen Schritt ausführt und
— die Speisung der Spule wird zu diesem Zeitpunkt (td) unterbrochen.

3. Verfahren nach Anspruch 1 oder 2, dadurch gekennzeichnet, daß die die Spule während des ersten vorgegebenen Zeitraumes ($T_1$) speisende Gleichspannung eine Spannung konstanter Amplitude ist.

4. Verfahren nach Anspruch 1 oder 2, dadurch gekennzeichnet, daß die die Spule während des ersten vorgegebenen Zeitraums ($T_1$) speisende Gleichspannung eine Spannung ist, die aus einer Folge von Impulsen gleicher Polarität besteht mit regelmäßigen Abständen und konstanter Amplitude.

5. Verfahren nach Anspruch 2, dadurch gekennzeichnet, daß wenn zu Beginn des Zeitraums ($T_2$) der in der Spule fließende Strom größer als ein erster Sollwert (Imax) ist, auf folgende Weise reagiert wird:

— die Spule wird kurzgeschlossen, bis der genannte Strom einen zweiten Sollwert (Imin<Imax) aufweist,
— ad diesem Zeitpunkt wird die Spule erneut gespeist bis der Strom erneut den ersten Sollwert (Imax) erreicht, wonach die Spule kurzgeschlossen wird, bis der Strom erneut den zweiten Sollwert (Imin) erreicht und so fort
— der Zeitraum ΔT wird gemessen, der erforderlich ist, damit der Strom ausgehend von den Werten (Imax) den unmittelbar darauffolgenden Wert (Imin) annimmt,—der Zeitraum ΔT wird mit einem Referenzzeitraum $ΔT_{ref}$ verglichen und
— die Spule wird nicht mehr gespeist sowie ΔT≥$T_{ref}$ ist.

6. Verfahren nach Anspruch 2, dadurch gekennzeichnet, daß wenn zu Beginn des Zeitraums ($T_2$) der in der Spule fließende Strom kleiner als ein erste Sollwert (Imax) ist, wie folgt reagiert wird:

— die Speisung wird beibehalten bis der genannte Strom den ersten Sollwert (Imax) erreicht hat,
— die Spule wird kurzgeschlossen bis der Strom einen zweiten Sollwert (Imin<Imax) erreicht,
— ab diesem Zeitpunkt wird die Spule erneut gespeist bis der Strom erneut den ersten Sollwert (Imax) erreicht, wonach die Spule kurzgeschlossen wird bis der Strom erneut den zweiten Sollwert (Imin) erreicht und so fort,
— der Zeitraum ΔT wird gemessen, der erforderlich ist für den Strom um von jedem der Werte (Imax) den umittelbar nachfolgenden Wert (Imin) anzunehmen,
— der Zeitraum wird mit einem Referenzzeitraum $ΔT_{ref}$ verglichen und
— die Spule wird nicht mehr gespeist sowie ΔT≥$ΔT_{ref}$ ist.

7. Verfahren nach Anspruch 5 oder 6, dadurch gekennzeichnet, daß sobald ΔT≥$ΔT_{ref}$ ist, die Spule kurzgeschlossen bleibt bis zur Ankunft des folgenden Steuerimpulses.

8. Vorrichtung zur Speisung eines Schrittmotors zur Durchführung des Verfahrens nach Anspruch 1 oder 2, dadurch gekennzeichnet, daß sie eine Anordnung aufweist zur Strommessung in der Spule während des zweiten Zeitraums ($T_2$) sowie eine Vergleicherschaltung, die mit der Anordnung verbunden ist um den die Spule während des Zeitraumes ($T_2$) durchfließenden Strom im wesentlichen konstant zu halten.

9. Verfahren nach Anspruch 1 oder 2, dadurch gekennzeichnet, daß die Uhr eine Armbanduhr ist.

**Claims**

1. Method of energizing a single phase stepping motor for a timepiece, adapted to furnish the motor winding with sufficient energy so that the rotor achieves its step at the instant of each control pulse, said motor having a positioning couple Ca, a drag couple Cr and a magnet-winding coupling factor k characterized by the succession of the following stages:

— during a first predetermined period $T_1$ the winding is fed by a direct voltage,
— after said period $T_1$ the winding is fed with substantially constant current during a second period of a maximum predetermined duration $T_2$, the rotor attaining at the end of said period

$T_2$ at least an angular position such that one is assured that it will achieve its step, and
— interrupting the feeding of the winding starting from the end of said period $T_2$.

2. Method of energizing a single phase stepping motor for a timepiece, adapted to furnish the motor winding with sufficient energy so that the rotor achieves its step at the instant of each control pulse, said motor having a positioning couple Ca, a drag couple Cr and a magnet-winding coupling factor k characterized by the succession of the following stages:

— during a first predetermined period $T_1$ the winding is fed by a direct voltage,
— after said period $T_1$ the winding is fed with substantially constant current during a second period of a maximum predetermined duration $T_2$, the rotor attaining at the end of said period $T_2$ at least an angular position such that one is assured that it will achieve its step,
— during said period $T_2$ detecting whether the coupling factor k has changed sign, in which case it is concluded that the rotor already occupies at the instant td of such detection an angular position such that one is assured that it will achieve its step, and
— interrupting the feeding of the winding at said instant td.

3. Method according to claim 1 or claim 2 characterized by the fact that the direct voltage feeding the winding during the first predetermined period $T_1$ is a voltage of constant amplitude.

4. Method according to claim 1 or claim 2 characterized by the fact that the direct voltage feeding the winding during the first predetermined period $T_1$ is a voltage constituted by a series of pulses of the same polarity regularly spaced and of constant amplitude.

5. Method according to claim 2 characterized by the fact that if at the beginning of the period $T_2$ the current developed in the winding is greater than a first limit value Imax the following actions are performed:

— the winding is short-circuited until said current attains a second limit value Imin<Imax,
— following this instant, the winding is reenergized until the current again attains the first limit value Imax, following which the winding is short-circuited until the current again attains the second limit value Imin and continuing thusly,
— the time lapse $\Delta T$ necessary for the current to pass from each of the values Imax to the immediately following value Imin is measured,
— said time lapse $\Delta T$ is compared with a reference period $\Delta T_{ref.}$, and
— the winding is no longer energized as soon as $\Delta T \geqq \Delta T_{ref.}$.

6. Method according to claim 2 characterized by the fact that if at the beginning of the period $T_2$ the current developed in the winding is less than a first limit value Imax the following actions are performed:

— the energization is maintained until said current attains said first limit value Imax,
— the winding is short-circuited until the current attains a second limit value Imin<Imax,
— following this instant the winding is reenergized until the current again attains the first limit value Imax, following which the winding is short-circuited until the current again attains the second limit value Imin and continuing thusly,
— the time lapse $\Delta T$ necessary for the current to pass from each of the values Imax to the immediately following value Imin is measured.
— said time lapse is compared with a reference period $\Delta T_{ref.}$ and
— the winding is no longer energized as soon as $\Delta T \geqq \Delta T_{ref.}$.

7. Method according to claim 5 or claim 6 characterized by the fact that as soon as $\Delta T \geqq \Delta T_{ref.}$ the winding is kept short-circuited until the arrival of the following control pulse.

8. Arrangement for feeding a stepping motor for putting into effect the method according to claim 1 or claim 2 characterized by the fact that it includes means for measuring the current during the second period $T_2$ and a comparing system coupled to said means for maintaining the current passing through the winding during said period $T_2$ substantially constant.

9. Method according to claim 1 or claim 2 characterized in that said timepiece is a wristwatch.

Fig. 1a

Fig. 1b

Fig. 1c

Fig.2

Fig.3

2

Fig.4

Fig.5